# EUROPÄISCHE PATENTSCHRIFT

(11) **EP 2 327 901 B1**
(45) Veröffentlichungstag und Bekanntmachung des Hinweises auf die Patenterteilung: **09.01.2013**
(21) Anmeldenummer: 10013292.7
(22) Anmeldetag: 04.10.2010
(51) Int. Cl.: F16D 48/06

(54) **Verfahren zum Überführen eines Antriebsstranges eines Kraftfahrzeugs von einem Segelzustand in einen Normalzustand**
Method for transferring a power train of a motor vehicle from coasting to normal
Procédé de transfert d'un conducteur de commande d'un véhicule automobile d'un état de voile vers un état normal

(30) Priorität: 27.11.2009 DE 102009055922
(43) Veröffentlichungstag der Anmeldung: 01.06.2011
(73) Patentinhaber: Volkswagen Aktiengesellschaft, 38440 Wolfsburg (DE)
(72) Erfinder: Schaefer, Stephan, 38458 Wahrstedt (DE)

(56) Entgegenhaltungen:
- WO-A1-02/078997
- DE-A1- 4 419 633
- US-A1- 2007 265 137

## Beschreibung

### Gebiet der Erfindung

Die Erfindung bezieht sich auf ein Verfahren zum Überführen eines Antriebsstrangs eines Kraftfahrzeugs von einem Segelzustand, in dem eine automatisierte Kupplung, mit der ein Momentenfluss zwischen einer Ausgangswelle eines Antriebsaggregats und einer Eingangswelle eines Getriebes schaltbar ist, während des Fahrbetriebs geöffnet und die Drehzahl der Ausgangswelle des Antriebsaggregats niedriger als die Drehzahl der Eingangswelle des Getriebes ist, in einen Normalzustand, in dem die Kupplung während des Fahrbetriebs geschlossen ist, wobei die Kupplung von einer Steuereinrichtung angesteuert wird, nach einer Betätigungsverstärkung eines Energiezufuhrbemessungselementes zu einem Zeitpunkt zu schließen, zu dem die Drehzahlen der Ausgangswelle des Antriebsaggregats und der Eingangswelle des Getriebes durch Erhöhung der Drehzahl der Ausgangswelle des Antriebsaggregats einander angeglichen sind.

### Stand der Technik

Ein derartiges Verfahren ist bekannt aus der WO 02/094601 A2.

Die Funktion des "Segelns" zum Zwecke der Energieeinsparung ist bei modernen Fahrzeugen bekannt. Erforderlich ist hierzu eine automatisierte Fahrkupplung, die zwischen dem Antriebsaggregat, z.B. einer Verbrennungskraftmaschine oder einer elektrischen Maschine, und einem Getriebe, beispielsweise einem Handschaltgetriebe, einem automatisierten Schaltgetriebe mit Gangstufen oder kontinuierlichen Übersetzungswechseln und mit oder ohne Zugkraftunterbrechung beim Übersetzungswechsel, angeordnet ist. Zur Steuerung der automatisierten Fahrkupplung ist üblicherweise ein Steuergerät vorgesehen. In Schubsituationen des Fahrbetriebs, wenn zudem vom Fahrer weder eine Betriebsbremse noch ein Energiezufuhrbemessungselement, beispielsweise ein Gaspedal, betätigt wird, kann zur Verringerung der Schleppverluste des Antriebsaggregats die Fahrkupplung geöffnet und das Antriebsaggregat abgeschaltet oder auf einem niedrigen Drehzahlniveau, insbesondere bei einer Leerlaufdrehzahl, betrieben werden, während die Drehzahl des Getriebes im Schubbetrieb von der kinetischen Energie des Kraftfahrzeugs bestimmt wird. Dieser Betriebszustand wird allgemein als Segeln bzw. Segelzustand bezeichnet.

Problematisch ist die Rückkehr in den Normalzustand, d.h. in denjenigen Zustand, in dem im Schub- oder Zugbetrieb die Fahrkupplung geschlossen ist und ein Momentenfluss zwischen dem Antriebsaggregat und dem Getriebe erfolgt. Dieser Zustandsübergang wird typischerweise durch eine Betätigung der Betriebsbremse oder des Energiezufuhrbemessungselementes initiiert. Signalisiert der Fahrer durch Betätigung der Betriebsbremse nämlich den Wunsch nach einer stärkeren Verzögerung des Kraftfahrzeugs ist es schon aus energetischen Gründen sinnvoll, die Bremswirkung des Antriebsaggregats mitzunutzen. Dies gilt insbesondere im Fall einer elektrischen Maschine, die durch Rekuperation kinetische Energie in elektrische Energie verwandeln kann. Die Betätigung des Energiezufuhrbemessungselementes kann hingegen den Wunsch des Fahrers nach einer Beschleunigung des Fahrzeugs signalisieren. Dies ist jedoch nicht zwingend der Fall. Viele Fahrer haben die Angewohnheit, auch im Segelzustand beispielsweise ein Gaspedal minimal gedrückt zu halten, um den mechanischen Kontakt nicht zu verlieren. Aus diesem Grund wird beispielsweise in der zitierten Druckschrift auch vorgeschlagen, den Zustandsübergang vom Segeln in den Normalzustand erst zu initiieren, wenn der Stellwinkel des Gaspedals 5 Grad überschreitet. Im Folgenden wird daher allgemein von Betätigungsverstärkung gesprochen, was auch die Aufnahme einer Betätigung nach vorangehender Nicht-Betätigung umfasst.

Die Schwierigkeit des Zustandsübergangs liegt darin, dass dieser möglichst für den Fahrer unbemerkt, jedenfalls weitestgehend ruckfrei erfolgen soll. Insbesondere soll keine Fahrzeugverzögerung eintreten, die sich trotz Beschleunigungswunsch des Fahrers durch ein Hochschleppen des Motors ergeben kann. Dieses Ziel ist insofern schwierig zu erreichen, als zu dem Zeitpunkt, zu dem im Stand der Technik im Steuergerät die Entscheidung über die Rückkehr in den Normalzustand getroffen wird, d.h. zu demjenigen Zeitpunkt, zu dem das Wiederankoppeln des Antriebsaggregates initiiert wird, die Antriebsaggregat-Ausgangswelle deutlich langsamer dreht als die Getriebeeingangswelle. Um den Übergang ruckfrei im oben genannten Sinn zu gestalten, ist vor dem Schließen der Kupplung ein Angleichen der Drehzahlen erforderlich. In der genannten Druckschrift wird daher vorgeschlagen, die Drehzahl der Ausgangswelle des Antriebsaggregats durch direkten Drehzahleingriff oder durch Momenteneingriff auf das Niveau der Eingangswelle des Getriebes anzuheben und die Kupplung in demjenigen Moment zu schließen, in dem die Angleichung erfolgt ist. In der genannten Druckschrift wird, ebenso wie im Rahmen der vorliegenden Beschreibung, unter Angleichung eine Annäherung der Drehzahlen bis unterhalb einer vorgegebenen Toleranzdifferenz verstanden. Diese sollte, um vom Fahrer als ruckfrei wahrgenommen zu werden, nicht größer als 5% oder 50 U/min sein. Eine gröbere Angleichung ist jedoch durchaus möglich, wenn ein gewisses Rucken beim Übergang in Kauf genommen wird.

Diese Einregelung der Motordrehzahl hat verschiedene Nachteile. Nimmt der Fahrer eine deutliche Betätigungsverstärkung des Energiezufuhrbemessungselementes vor, wird die mit der Einregelung verbundene zeitliche Verzögerung bis zum Wiederankoppeln des Aggregats als nachteilig empfunden. Verstärkt der Fahrer seine Betätigung des Energiezufuhrbemessungselementes jedoch nur zögerlich, entspricht das resultierende "Zwischengas" nicht den Erwartungen des Fahrers und wird daher als unangenehm empfunden. Zudem spürt der Fahrer nach dem Wiederankoppeln des Aggregates eine Fahrzeugverzögerung, wenn nämlich dasjenige Moment, welches von der Steuerung über das vom Fahrer konkret angeforderte Moment hinaus erzeugt wurde, nach Wiederankoppeln des Motors wieder abgebremst wird.

Aus der DE 44 19 633 A1 ist ein Verfahren zur automatischen Kupplungssteuerung zur Beendigung von Schubbetrieb eines Kraftfahrzeugs bekannt, bei dem eine Motordrehzahl nur in Abhängigkeit von einer Fahrpedalstellung bestimmt wird. Zur Verkürzung eines Kupplungsschließvorgangs beim Beenden der Schubbetriebsphase ermittelt ein Steuerungscomputer während des Fahrzeugbetriebes ständig die zeitliche Veränderung der Motordrehzahl mit der Zeit. Betätigt der Fahrer der Fahrpedal sehr schnell, dreht der Motor schnell hoch, diese Steuerungsgröße übersteigt bestimmten festgelegten Wert und der Kupplungsschließvorgang wird vorgezogen d.h. der wird noch vor der Abstimmung der Motordrehzahl mit der Getriebeeingangswellendrehzahl ausgelöst. Dadurch sollte trotz der gewissen Verzögerung bis vollständigen Greifen der Kupplung eine Überschwingung der Motodrehzahl über die Getriebeeingangswellendrehzahl verhindert werden.

Solche Steuerung weist große Ansprüche an das Steuergerät, da ständig viele Berechnungen durchgeführt werden müssen.

### Aufgabenstellung

Es ist die Aufgabe der vorliegenden Erfindung, ein gattungsgemäßes Verfahren vereinfachen und derart weiterzubilden, dass der Übergang vom Segelzustand in den Normalzustand für den Fahrer komfortabler verläuft.

### Darlegung der Erfindung

Diese Aufgabe wird in Verbindung mit den Merkmalen des Oberbegriffs von Anspruch 1 dadurch gelöst, dass während des Segelzustandes das von dem Antriebsaggregat abgegebene Motormoment auf ein vorgegebenes Maximalmoment begrenzt wird, wobei das vorgegebene Maximalmoment (34) nut Beginn des Schließvorgangs der Kupplung graduell erhöht wird und die Momentbegrenzung nach Abschluss des Schließvorgangs der Kupplung aufgehoben wird.

Anders als beim Stand der Technik wird erfindungsgemäß keine vom Fahrer unbeeinflussbare Regelung zur Angleichung der Drehzahlen vorgenommen. Vielmehr erfolgt die Drehzahlsteuerung des Antriebsaggregats im Wesentlichen allein durch die Vorgaben, die der Fahrer durch den Betätigungsverlauf des Energiezufuhrbemessungselementes vorsieht. Die Kupplungssteuerung ist im Wesentlichen darauf beschränkt, denjenigen Zeitpunkt ausfindig zu machen, zu dem die Drehzahlangleichung erfolgt ist, und dann das Schließen der Kupplung durchzuführen. Das Schließen der Kupplung erfolgt vorzugsweise instantan, d.h. mit der maximalen Stellgeschwindigkeit, die die spezielle Konstruktion der Kupplung (z.B. hydraulisch, elektrisch etc.) zulässt. Da die erfindungsgemäße Steuerung auf eine aktive Einreglung der Motordrehzahl verzichtet, kann auch von einer passiven Steuerung gesprochen werden.

Diese passive Steuerung hat zum einen den Vorteil einer verzögerungsfreien Ankopplung und Zugaufnahme im Fall einer zügigen Betätigung des Energiezufuhrbemessungselementes. lm Fall einer zögerlichen Betätigung des Energiezufuhrbemessungselementes hingegen spürt der Fahrer kein unerwartetes Verhalten des Motors oder des Fahrzeugs. Wird insbesondere die Motordrehzahl durch Betätigung des Energiezufuhrbemessungselementes nur soweit erhöht, dass sie die Drehzahl der Getriebeeingangswelle nicht erreicht, wird der Segelzustand nicht verlassen und der Fahrer spürt nur die geringfügige Drehzahlerhöhung des Motors als unmittelbare und erwartungsgemäße Reaktion auf seine Betätigungshandlung.

Zur Durchführung des erfindungsgemäßen Verfahrens ist es erforderlich, dass der Ausgangswelle des Antriebsaggregats sowie der Eingangswelle des Getriebes Drehzahlsensoren zugeordnet sind und die jeweiligen Drehzahlen periodisch oder kontinuierlich an die Steuereinheit übermittelt werden. Es ist daher besonders bevorzugt, die Erfindung bei Kraftfahrzeugen einzusetzen, deren Getriebe als Doppelkupplungsgetriebe ausgebildet ist. Bei derartigen Doppelkupplungsgetrieben ist es nämlich bereits zur Erreichung der Zugkraftunterbrechungsfreiheit von Schaltvorgängen, welche diese Art von Getrieben so vorteilhaft macht, erforderlich, die genannten Sensoren vorzusehen. Die Realisierung des erfindungsgemäßen Verfahrens kann daher günstigerweise in Software und zwar in einer Steuersoftware des Steuergerätes realisiert werden, ohne dass dazu zusätzliche bauliche Änderungen vorgenommen werden müssten. Allerdings ist die vorliegende Erfindung selbstverständlich auch bei allen anderen Arten von Getrieben, insbesondere manuellen Getrieben, automatisierten Schaltgetrieben etc. anwendbar.

Trotz der bevorzugten, instantanen Zustellung der Kupplung benötigt der Schließvorgang in jedem Fall eine endliche Zeitspanne. In Extremfällen, in denen der Fahrer das Energiezuführungsbemessungselement untypisch schnell und weit betätigt, die Motordrehzahl somit extrem schnell hochreißt, könnte es sein, dass die zur Zustellung der Kupplung benötigte Zeitspanne zu lang ist, um dem schnellen Anstieg zu folgen. Die Motordrehzahl könnte daher die Getriebedrehzahl überholen, sodass das Einkuppeln mit einem unkomfortablen Ruck verbunden ist. Um dem Abhilfe zu schaffen, ist bei einer bevorzugten Weiterbildung der Erfindung vorgesehen, dass während des Segelzustandes das von dem Antriebsaggregat abgegebene Motormoment auf ein vorgegebenes Maximalmoment begrenzt wird. Dieses Maximalmoment kann mit Beginn des Schließvorgangs der Kupplung graduell erhöht werden, wobei der Gradient bevorzugt dem Gradienten der maximalen Zunahme des Kupplungsmomentes beim instantanen Schließvorgang entspricht. In den zuvor geschilderten Fällen der extremen Betätigung des Energiezufuhrbemessungselementes spürt der Fahrer dann zwar eine geringfügige Verzögerung des Anstiegs der Motordrehzahl gegenüber seiner eigenen Betätigungshandlung; die Wiederankopplung des Motors erfolgt jedoch ruckfrei. Nach Abschluss des Schließvorgangs wird die Momentenbegrenzung bevorzugt vollständig aufgehoben.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: eine schematische Darstellung eines Kraftfahrzeugs zur Anwendung des erfindungsgemäßen Verfahrens,
- Figur 2:: drei beispielhafte Diagramme zur Erläuterung des erfindungsgemäßen Verfahrens.

### Ausführliche Beschreibung bevorzugter Ausführungsformen

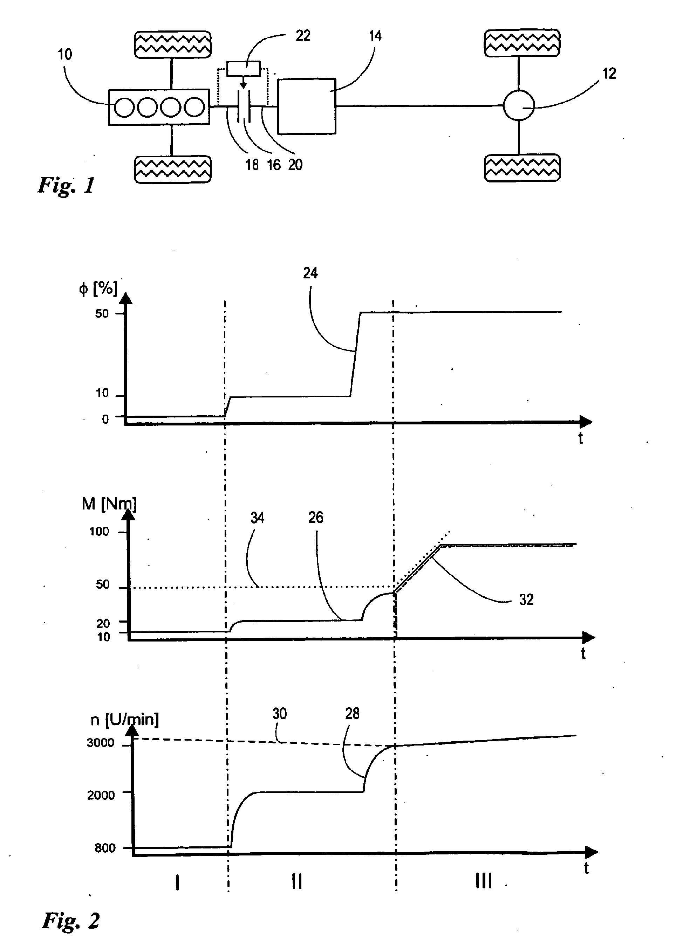

Figur 1 zeigt eine schematische Darstellung eines Kraftfahrzeugs mit den für die Anwendung der vorliegenden Erfindung notwendigen Komponenten. Rein beispielhaft ist ein Kraftfahrzeug mit einem Verbrennungsmotor 10 und einer einzigen angetriebenen Hinterachse 12 dargestellt. Die Erfindung lässt sich doch auch auf Kraftfahrzeuge mit angetriebener Vorderachse oder mehreren angetriebenen Achsen sowie auf Fahrzeuge mit Elektromotor oder Hybridfahrzeuge mit Verbrennungs- und Elektromotor anwenden. Das Moment des Motors 10 wird einem Getriebe 14 zugeführt, in welchem die erforderliche Übersetzung erfolgt. Zur Vermittlung des Momentes zwischen dem Motor 10 und dem Getriebe 14 ist eine Kupplung 16 vorgesehen, deren Eingangselement mit der Ausgangswelle 18 des Motors und deren Ausgangselement mit der Eingangswelle 20 des Getriebes verbunden ist. Den beiden Wellen 18, 20 ist jeweils ein nicht näher dargestellter Drehzahlsensor zugeordnet. Die Messergebnisse der Drehzahlsensoren werden über Sensorleitungen (in Figur 1 punktiert dargestellt) einem Steuergerät 22 zugeführt. ln dem Steuergerät sind vorzugsweise in Form von Software Regeln zur Realisierung des erfindungsgemäßen Verfahrens hinterlegt. Das Steuergerät 22 steuert nicht im Detail dargestellte Stellelemente an, welche die Kupplung 16 betätigen.

Figur 2 zeigt drei Diagramme, die in stark schematisierter, rein beispielhafter Darstellung den Verlauf verschiedener Kenngrößen beim Ablauf des erfindungsgemäßen Verfahrens darstellen. In einem ersten Diagramm ist die Stärke der Betätigung eines Energiezufuhrbemessungselementes in Prozent seiner maximalen Betätigung dargestellt. Beispielhaft ist diese Größe als Stellwinkel Φ 24 bezeichnet. Ein zweites Diagramm zeigt den Verlauf des Motormomentes M 26. Ein drittes Diagramm zeigt die Drehzahl n 28 der Ausgangswelle 18 des Motors 10. Alle Größen sind als Funktion der Zeit t dargestellt.

In dem Diagramm sind drei Phasen I, II, III gezeigt. Phase I zeigt klassisches Segeln. Phase II zeigt eine Phase, in der erfindungsgemäß gesegelt wird, obwohl der Fahrer das Gaspedal betätigt hat. Phase III zeigt den Ausstieg aus dem Segelzustand, d.h. die Rückkehr in den Normalzustand, sowie klassisches Fahren.

In Phase I segelt das Fahrzeug, die Kupplung 16 ist offen: Der Motor 10 befindet sich im Leerlauf und die Geschwindigkeit des Kraftfahrzeugs nimmt z.B. aufgrund des Luftwiderstandes leicht ab. In dieser Phase ist das Gaspedal nicht betätigt (Null Prozent des maximalen Pedalwinkels Φ 24. Das Motormoment M 26 ist auf Leerlaufniveau, im gezeigten Beispiel auf 10 Nm und die Motordrehzahl ist auf Leerlaufniveau, im gezeigten Beispiel bei etwa 800 U/min. Im dritten Diagramm ist als gestrichelte Linie zusätzlich die Synchrondrehzahl 30 eingezeichnet. Diese entspricht der aktuellen Drehzahl der Getriebeeingangswelle 20. Sie ist in Phase I und II entsprechend der Geschwindigkeit des Kraftfahrzeugs leicht fallend dargestellt.

Phase II wird durch eine leichte Betätigung des Gaspedals eingeleitet. Im gezeigten Beispiel wird das Gaspedal auf ca. 10% des maximalen Pedalwinkels Φ 24 durchgetreten. Entsprechend erhöht sich die Motordrehzahl n 28 von der Leerlaufdrehzahl auf eine moderate Drehzahl von ca. 2000 U/min, das Motormoment M26 erhöht sich geringfügig auf ca. 20 Nm. Die erreichte Motordrehzahl n28 liegt unter der aktuellen Synchrondrehzahl 30. Erfindungsgemäß greift hier nun keine Drehzahlregelung ein. Vielmehr wird der Segelzustand beibehalten, obgleich eine Pedalbetätigung detektiert wurde.

Gegen Ende der Phase II wird das Gaspedal weiter durchgetreten, nämlich auf ca. 50% des maximalen Pedalwinkels Φ 24. Hierdurch erhöht sich die Motordrehzahl weiter, nämlich bis auf ca. 3000 U/min. Dies entspricht bei dem gezeigten Beispiel der aktuellen Synchrondrehzahl. Diese Drehzahlangleichung wird von dem Steuergerät 22 detektiert und die Kupplung 16 geschlossen. Das Schließen der Kupplung 16 erfolgt vorzugsweise instantan. In Figur 2 ist jedoch im zweiten Diagramm (Motormomentes M 26) die ansteigende Kupplungskapazität 32 aus Gründen der Übersichtlichkeit der Figur mit einem vergleichsweise geringen Gradienten dargestellt. Mit dem Schließen der Kupplung 16 geht das Fahrzeug in den Zugbetrieb über. Motordrehzahl n 28 und Getriebedrehzahl 30 verlaufen gleich und weiter leicht ansteigend, sodass das Fahrzeug eine leichte Beschleunigung erfährt.

Um ein zu starkes Hochreißen der Motordrehzahl im Segelbetrieb zu verhindern, liegt während des Segelbetriebes eine Momentenbegrenzung 34 an, die im dargestellten Beispiel auf 50 Nm festgelegt ist. Diese Begrenzung kann als absoluter Grenzwert hinterlegt sein, kann jedoch auch jeweils in Abhängigkeit von der aktuellen Fahrzeuggeschwindigkeit und der eingestellten Getriebeübersetzung bestimmt werden. Insbesondere kann bei hoher Fahrzeuggeschwindigkeit, d.h. bei großer Drehzahldifferenz zwischen Motor und Getriebe, ein höheres Maximalmoment vorgesehen sein als bei geringer Drehzahldifferenz. Während des Einkuppelvorgangs wird das durch die Momentenbegrenzung 34 vorgegebene Maximalmoment graduell erhöht und zwar bevorzugt wie in Figur 2 dargestellt, nämlich mit dem gleichen Gradienten, mit dem das Kupplungsmoment 32 zunimmt. Sobald die Kupplung 16 geschlossen ist, kann die Momentenbegrenzung 34 vollständig aufgehoben werden.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten anhand gegeben. Insbesondere können die besonderen Ausführungen des Motors und des Getriebes beliebig gewählt werden. Die Geschwindigkeit des Schließvorgangs der Kupplung kann an die Anforderungen des jeweiligen Einzelfalles angepasst werden. Auch die Wahl der verwendeten Grenzwerte, beispielsweise für die Momentenbegrenzung 34 kann gemäß den besonderen Anforderungen des Einzelfalles variiert werden. Insbesondere ist denkbar, dass bei einem Fahrzeug unterschiedliche Sportlichkeitsstufen einstellbar sind, die mit unterschiedlichen Grenzwerten, Gradienten und Drehzahlangleichungstoleranzen verbunden sind.

### Bezugszeichenliste

- 10: Motor
- 12: angetriebene Hinterachse
- 14: Getriebe
- 16: Kupplung
- 18: Motorausgangswelle
- 20: Getriebeeingangswelle
- 22: Steuergerät
- 24: Gaspedalwinkel
- 26: Motormoment
- 28: Motorausgangsdrehzahl
- 30: Synchrondrehzahl/Getriebeeingangsdrehzahl
- 32: Kupplungsmoment
- 34: Maximalmoment

## Patentansprüche

1. Verfahren zum Überführen eines Antriebsstrangs eines Kraftfahrzeugs von einem Segelzustand, in dem eine automatisierte Kupplung (16), mit der ein Momentenfluss zwischen einer Ausgangswelle (18) eines Antriebsaggregats (10) und einer Eingangswelle (20) eines Getriebes (14) schaltbar ist, während des Fahrbetriebs geöffnet und die Drehzahl der Ausgangswelle (18) des Antriebsaggregats (10) niedriger als die Drehzahl der Eingangswelle des Getriebes (14) ist,
in einen Normalzustand, in dem die Kupplung (16) während des Fahrbetriebs geschlossen ist,
wobei die Kupplung (16) von einer Steuereinrichtung (22) angesteuert wird, nach einer Betätigungsverstärkung eines Energiezufuhrbemessungselementes zu einem Zeitpunkt zu schließen, zu dem die Drehzahlen (28;30) der Ausgangswelle (18) des Antriebsaggregats (10) und der Eingangswelle (20) des Getriebes (14) durch Erhöhung der Drehzahl (28) der Ausgangswelle (18) des Antriebsaggregats (10) einander angeglichen sind,
wobei die Erhöhung der Drehzahl (28) der Ausgangswelle (18) des Antriebsaggregats (10) gemäß einem vom Fahrer vorgegebenen Betätigungsverlauf des Energiezufuhrbemessungselementes erfolgt, **dadurch gekennzeichnet,**
**dass** während des Segelzustandes das von dem Antriebsaggregat (10) abgegebene Motormoment (26) auf ein vorgegebenes Maximalmoment (34) begrenzt wird, wobei das vorgegebene Maximalmoment (34) mit Beginn des Schließvorgangs der Kupplung (16) graduell erhöht wird und die Momentbegrenzung nach Abschluss des Schließvorgangs der Kupplung (16) aufgehoben wird.

2. Verfahren nach Anspruch 1, **dadurch gekennzeichnet, dass** das Schließen der Kupplung (16) zum angesteuerten Zeitpunkt instantan erfolgt.

3. Verfahren nach einem der vorangehenden Ansprüche, **dadurch gekennzeichnet**, das der Ausgangswelle (18) des Antriebsaggregats (16) sowie der Eingangswelle (20) des Getriebes (14) Drehzahlsensoren zugeordnet sind und die jeweiligen Drehzahlen (28; 30) periodisch oder kontinuierlich an die Steuereineinheit (20) übermittelt werden.

4. Verfahren nach Anspruch 3, **dadurch gekennzeichnet, dass** das Getriebe (14) ein Doppelkupplungsgetriebe ist.

## Claims

1. Method for switching a drivetrain of a motor vehicle
from a coasting state in which an automated clutch (16), by means of which a torque flow between an output shaft (18) of a drive assembly (10) and an input shaft (20) of a gearbox (14) can be switched, is open during driving operation and the rotational speed of the output shaft (18) of the drive assembly (10) is lower than the rotational speed of the input shaft of the gearbox (14),
into a normal state in which the clutch (16) is closed during driving operation,
wherein the clutch (16) is activated by a control device (22), after an intensification of an actuation of an energy supply metering element, so as to close at a time at which the rotational speeds (28; 30) of the output shaft (18) of the drive assembly (10) and of the input shaft (20) of the gearbox (14) are aligned with one another by means of an increase of the rotational speed (28) of the output shaft (18) of the drive assembly (10),
wherein the increase of the rotational speed (28) of the output shaft (18) of the drive assembly (10) takes place in accordance with an actuation profile, predefined by the driver, of the energy supply metering element, **characterized in that**, during the coasting state, the engine torque (26) output by the drive assembly (10) is limited to a predefined maximum torque (34), wherein the predefined maximum torque (34) is gradually increased upon the start of the closing process of the clutch (16), and the torque limitation is eliminated after the completion of the closing process of the clutch (16).

2. Method according to Claim 1, **characterized in that** the closing of the clutch (16) takes place instantaneously at the time of activation.

3. Method according to one of the preceding claims, **characterized in that** the output shaft (18) of the drive assembly (16) and the input shaft (20) of the gearbox (14) are assigned rotational speed sensors, and the respective rotational speeds (28; 30) are transmitted periodically or continuously to the control unit (20).

4. Method according to Claim 3, **characterized in that** the gearbox (14) is a dual clutch gearbox.

## Revendications

1. Procédé de transfert d'une chaîne cinématique d'un véhicule automobile d'un état de marche en roue libre, dans lequel un embrayage automatisé (16), à l'aide duquel un flux de couple peut être commuté entre un arbre de sortie (18) d'un groupe motopropulseur (10) et un arbre d'entrée (20) d'une transmission (14), est ouvert pendant la conduite et la vitesse de rotation de l'arbre de sortie (18) du groupe motopropulseur (10) est inférieure à la vitesse de rotation de l'arbre d'entrée de la transmission (14),
à un état normal, dans lequel l'embrayage (16) est fermé pendant la conduite,
l'embrayage (16) étant commandé par une unité de commande (22), après une amplification d'actionnement d'un élément de mesure d'alimentation en énergie, pour se fermer à un instant auquel les vitesses de rotation (28 ; 30) de l'arbre de sortie (18) du groupe motopropulseur (10) et de l'arbre d'entrée (20) de la transmission (14) sont ajustées l'une à l'autre par augmentation de la vitesse de rotation (28) de l'arbre de sortie (18) du groupe motopropulseur (10) ;
l'augmentation de la vitesse de rotation (28) de l'arbre de sortie (18) du groupe motopropulseur (10) s'effectuant selon une variation d'actionnement, prédéfinie par le conducteur, de l'élément de mesure d'alimentation en énergie, **caractérisé en ce que**, pendant l'état de marche en roue libre, le couple de moteur (26) fourni par le groupe motopropulseur (10) est limité à un couple maximal prédéfini (34), le couple maximal prédéfini (34) étant graduellement augmenté au début de l'opération de fermeture de l'embrayage (16) et la limitation de couple étant interrompue après l'achèvement de l'opération de fermeture de l'embrayage (16).

2. Procédé selon la revendication 1, **caractérisé en ce que** la fermeture de l'embrayage (16) s'effectue instantanément à l'instant commandé.

3. Procédé selon l'une quelconque des revendications précédentes, **caractérisé en ce que** des capteurs de vitesse de rotation sont associés à l'arbre de sortie (18) du groupe motopropulseur (16) ainsi qu'à l'arbre d'entrée (20) de la transmission (14) et les vitesses de rotation respectives (28 ; 30) sont transmises périodiquement ou continuellement à l'unité de commande (20).

4. Procédé selon la revendication 3, **caractérisé en ce que** la transmission (14) est une transmission à embrayage double.
